# EUROPEAN PATENT SPECIFICATION

(11) **EP 1 741 168 B1**
(45) Date of publication and mention of the grant of the patent: **04.05.2011**
(21) Application number: 05724578.9
(22) Date of filing: 03.03.2005
(51) Int. Cl.: H01S 3/225, H01S 3/134, H01S 3/097, H01S 3/038, H01S 3/104, H01S 3/07, H01S 3/23

(54) **VERY HIGH REPETITION RATE NARROW BAND GAS DISCHARGE LASER SYSTEM**
SCHMALBANDIGES GASENTLADUNGSLASERSYSTEM MIT EINER SEHR HOHEN REPETITIONSRATE
SYSTEME LASER A DECHARGE DE GAZ A BANDE ETROITE ET FREQUENCE DE REPETITION TRES ELEVEE

(30) Priority: 31.03.2004 US 815386
(43) Date of publication of application: 10.01.2007
(73) Proprietor: Cymer, Inc., San Diego, CA 92127-2413 (US)
(72) Inventor: STEIGER, Thomas, D., San Diego, CA 92128 (US); HOLTAWAY, Edward, P., Carlsbad, CA 92009 (US); MOOSMAN, Bryan, G., San Marcos, CA 92078 (US); RAO, Rajasekhar, M., San Diego, CA 92129 (US)
(74) Representative: Grünecker, Kinkeldey, Stockmair & Schwanhäusser Anwaltssozietät
(86) International application number: PCT/US2005/007064
(87) International publication number: WO 2005/104312

(56) References cited:
- US-A1- 2002 186 739
- US-B1- 6 192 064

## Description

### FIELD OF THE INVENTION

The present invention relates to gas discharge lasers, e.g., used to provide narrow band light, e.g., for integrated circuit lithography purposes, which requires not only narrow band light but also high stability in such things as center wavelength and bandwidth over, e.g., large ranges of output pulse repetition rates and at very high pulse repetition rates.

### BACKGROUND OF THE INVENTION

US 6 192 064 B1 discloses a pulsed gas discharge laser system in a MOPA configuration, with a master oscillator and three or more amplifier modules in parallel for amplifying a portion of the light from the oscillator. The amplified beams are combined to provide an increased output energy.

### SUMMARY OF THE INVENTION

An apparatus according to the present invention comprises the features defined in claim 1.

A method according to the present invention comprises the features defined in claim 8.

### BRIEF DESCRIPTION OF THE DRAWINGS

FIG. 1 shows a schematic view of a very high repetition rate laser system according to aspects of an embodiment of the present invention delivering light to a lithography tool;
FIG.'s 2A and 2B, respectively show a schematic side view and plan view of aspects of an embodiment of the present invention;
FIG.'s 3A - C show schematically alternative embodiments of a solid state pulse power system module according to aspects of an embodiment of the present invention; and,
FIG 4 shows a timing diagram illustrative of a timing of firing between an oscillator laser and an amplifier laser according to aspects of an embodiment of the present invention;
FIG. 5 shows partly schematically aspects of an embodiment of the present invention utilizing two parallel gas discharge regions;
FIG. 6 shows schematically a compression head portion of a pulse power system according to aspects of an embodiment of the present invention useable with the embodiment of FIG. 5; and,
FIG. 7 shows schematically aspects of an embodiment of an optical system useable with the embodiment of FIG. 5.

### DETAILED DESCRIPTION OF PREFERRED EMBODIMENTS

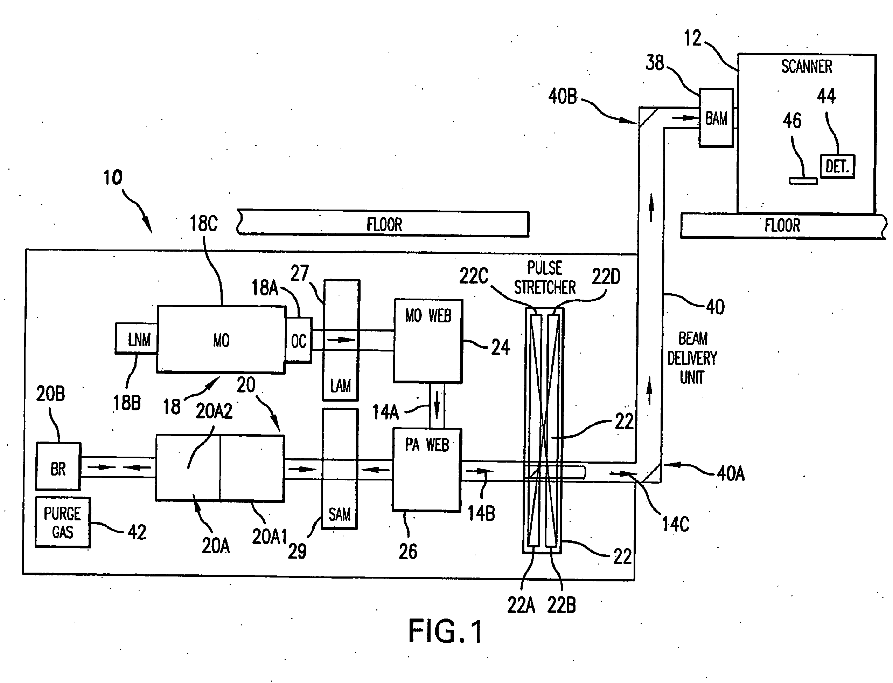

Turning now to FIG. 1 there is shown a schematic view of a very high repetition rate laser system 10. The laser system 10 may deliver light, e.g., DUV light, to a lithography tool, e.g., a scanner or stepper/scanner 12. The light, e.g., DUV light, source may comprise, e.g., a two chamber laser system comprising, e.g., a master oscillator laser system 18, the output of which is a narrow band laser output pulse beam 14A. The master oscillator 18 system may comprise a master oscillator laser gas discharge chamber 18c, an output coupler 18a and a line narrowing module 18B together forming the oscillator cavity for the master oscillator laser system 18.

The system 10 may also comprise, e.g., a power amplification system 20, which may comprise, e.g., a pair of power amplification laser chambers 20A, 20A1 and 20A2, which may, e.g., be in series with each other, such that the master oscillator laser system 18 output light pulse beam passes first through chamber 20A1 and then through chamber 20A2 (both of which could be formed into a single chamber 20A) and to a beam reflector 20B creating a second pass of the beam 14A through the chamber(s) 20A1 and 20 A2 in reverse order of the first pass to form power amplification system 20 output laser light pulse beam 14B.

The output beam 14A may pass from the output coupler 18a of the master oscillator laser system 18 through a line center analysis module 27 that, e.g., measures the center wavelength of the narrow band light output of the master oscillator and then through a master oscillator wavefront engineering box, which may incorporate, e.g., relay optics or portions thereof to relay the output beam 14A to a power amplification wavefront engineering box 26 that redirects the beam 14A into the power amplification laser system 20 as explained in more detail below.

The output of the power amplification laser system 20 may then pass through a spectral analysis module that, e.g., measures the bandwidth of the output beam 14B and through a pulse stretcher 22, comprising, e.g., multiple reflecting mirrors 22A-D that may, e.g., increase the total integrated spectrum ("TIS") of the output beam 14B to form an output beam 14C that may be, e.g., delivered to the lithography tool 12 through, e.g., a beam delivery unit 40. The beam delivery unit 40 may comprise, e.g., mirrors 40A and B at least one of which may be a fast acting beam directing mirror to modify, e.g., the beam direction and pointing of the output beam 14C as it enters the lithography tool. A beam analysis module 38 may be positioned, e.g., essentially at the input of the light to the lithography tool 12, e.g., measuring beam intensity, direction and pointing as it enters the lithography tool 12.

The lithography tool may have, e.g., beam intensity and quality detectors 44, 46, that may, e.g., provide feedback to the laser system 10 controller (not shown) Similarly outputs from the LAM 27, SAM 29 and BAM 38 may be used by the laser system control for such things as controlling charging voltage and/or firing timing between the MO and PA systems and gas injection into either or both of the MO and PA systems. The laser system may also include a purge gas system to purge one or more elements in the LAM 27, SAM 28, MOWEB 24, PA WEB 26, pulse stretcher 22 and/or beam delivery unit 40.

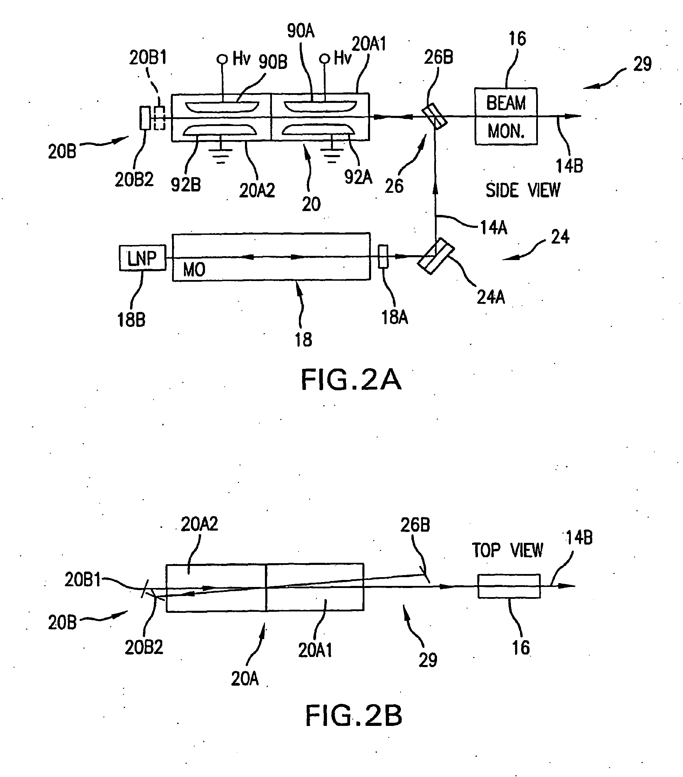

As shown schematically in Fig. 2a, the output beam 14A from the MO 18 may pass through the output coupler 18A and be reflected by an essentially totally reflecting mirror 24A in the MO WEB 24 to another essentially totally reflecting mirror 26B in the PA WEB 26. It will be understood that the beam detector 16 in the PA WEB 26 is shown schematically out of place in the optical path of the output beam 14B of the PA system 20 for clarity sake. Turning to FIG 2B there is shown schematically the fact that in a top plan view, the mirror 26B is slightly out of the optical axis of the PA output beam 14B and reflects the output beam 14A from the MO system 18 through the PA system 20 at a slight angle to the optical and discharge longitudinal centerline axis of the PA. In the embodiment shown illustratively, where the PA laser system may be in two chambers or a single chamber, the tilted path may intersect the longitudinal centerline optical and discharge axes of a pair of electrode pairs 90A, 92A and 90B, 92B, and then be reflected by, e.g., two essentially totally reflecting mirrors 20B 1 and 20B2 in the beam reflecting module 20B back through the PA system 20 chambers 20A2 and 20A1 in that order, essentially along the longitudinal centerline optical and gas discharge axis of the electrodes 90A, 92A and 90B, 92B. This may simplify then optics utilized and at the same time optimize the utilization of the amplification occurring in the discharge regions between the electrode pairs, 90A, 92A and 90B, 92B respectively. It will be understood by those skilled in the art that the respective MO chamber and PA chamber(s) are not drawn in this schematic view to any kind of scale, e.g., in longitudinal length.

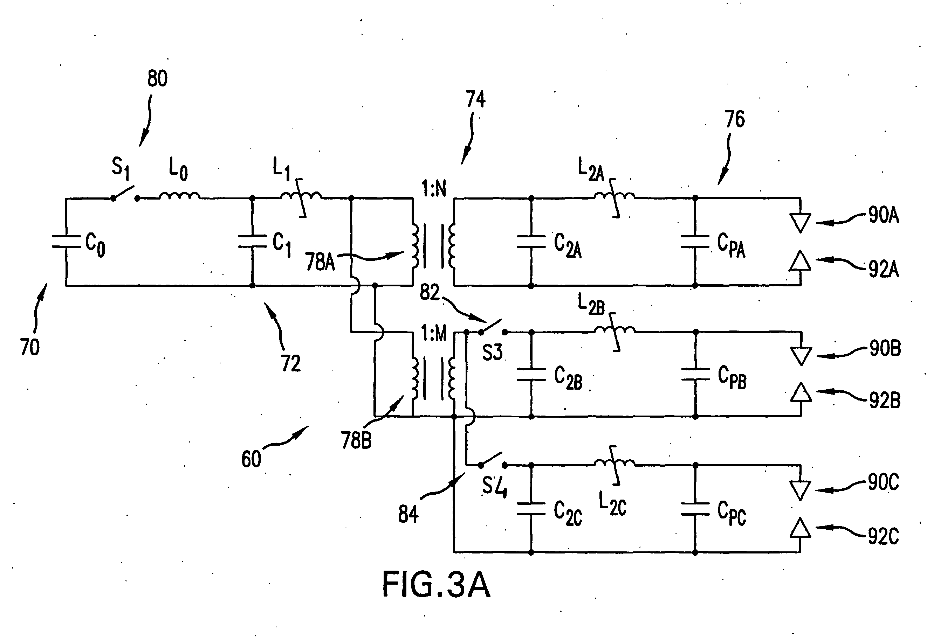

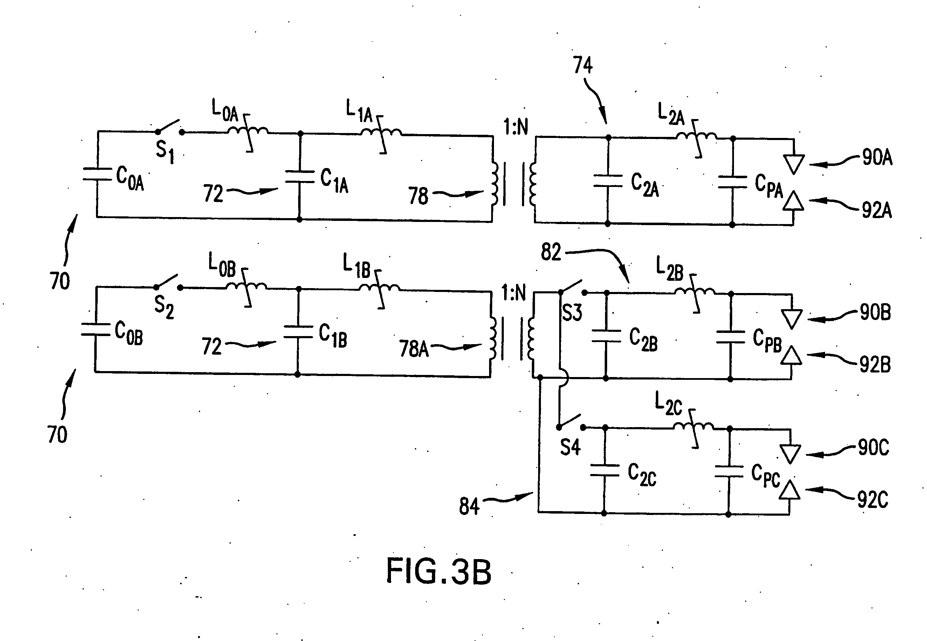

Turning now to FIG. 3A there is shown a solid state pulse power module 60 according to aspects of an embodiment of the present invention which may incorporate, e.g., a charging capacitor C₀ 70 that is the input, through a solid state switch S₁ to a first stage of a commutator module 80. Upon the closing of switch S₁ once the charging capacitor C₀ is fully charge, by a resonant charger (not shown) the second stage capacitor C₁ is charged through a magnetic saturable reactor L₀, which compresses the pulse. When the charge on second stage capacitor C₁ is sufficient to close a second magnetically saturable reactor switch L₁, by saturating the switch magnetically, the charge on the second stage capacitor C₁ in the commutator section 80 is stepped up in one of a pair of fractional winding step up transformers 78A, 78B, e.g., containing N (or M) single winding primary coils in parallel and a single winding secondary, such that the voltage output is stepped up N (or M) times, where N may equal M. The transformers 78A, 78B may be, e.g., connected in parallel to the output of the second compression stage of the commutator section 80, i.e., the output of L₁.

The stepped-up voltage output of the transformer 78A may be, e.g., connected to the input of a compression head stage comprising, e.g., a capacitor C_{2A} and a magnetically saturable reactor switch L_{2A}, the output of which may be connected to a peaking capacitor C_{P}, which may be, e.g., connected across the electrodes of the MO System 18, 90A and 92A. The stepped-up voltage output of the transformer 78B may, e.g., be connected in parallel to a compression head 82 and a compression head 84, each of which may also comprise, e.g., a capacitor C_{2B} and C_{2C,} a magnetically saturable reactor switch L_{2B} and L_{2C}, respectively and a respective peaking capacitor C_{PB} and C_{PC}. The respective peaking capacitors C_{PB} and C_{PC} may be connected to respective PA chamber(s) electrodes 90B, 92B and 90C, 92C. Which of the electrode pairs 90B, 92B or 90C, 92C will receive the output of the respective compression head 82, 84 each time the electrodes 90A, 92A of the MO system 18 receive an electric pulse from C_{PA} may be determined, e.g., by solid state switches S₃ and S₄.

In this way, the PA chamber(s) with their respective electrode pairs 90B, 92B and 90C, 92C may be alternatively selected for producing a gas discharge for a given MO laser output pulse 14A.

It will be understood by those skilled in the art that by the arrangement according to aspects of an embodiment of the present invention, the MO may be optimized for line narrowing as is well understood in the art of molecular fluorine or excimer gas discharge MOPA laser configurations and the PA chamber(s) may be optimized for current state of the art pulse repetition operation, e.g., around 4KHz or so, allowing for the overall system 10 to achieve very high repetition rates of, e.g., 8KHz and above without exceeding critical performance parameters which currently prevent a single chamber PA system from operating at any anywhere near, e.g., 8KHz, e.g., fan speed, fan temperature, fan vibration, etc. necessary for operating at around 8KHz with a single set of PA electrodes. It will also be understood, that the relatively low power MO operation may relatively easily be brought up to pulse repetition rates of around, e.g., 8KHz and still output a line narrowed relatively low power output beam 14A at such very high pulse repetition rates.

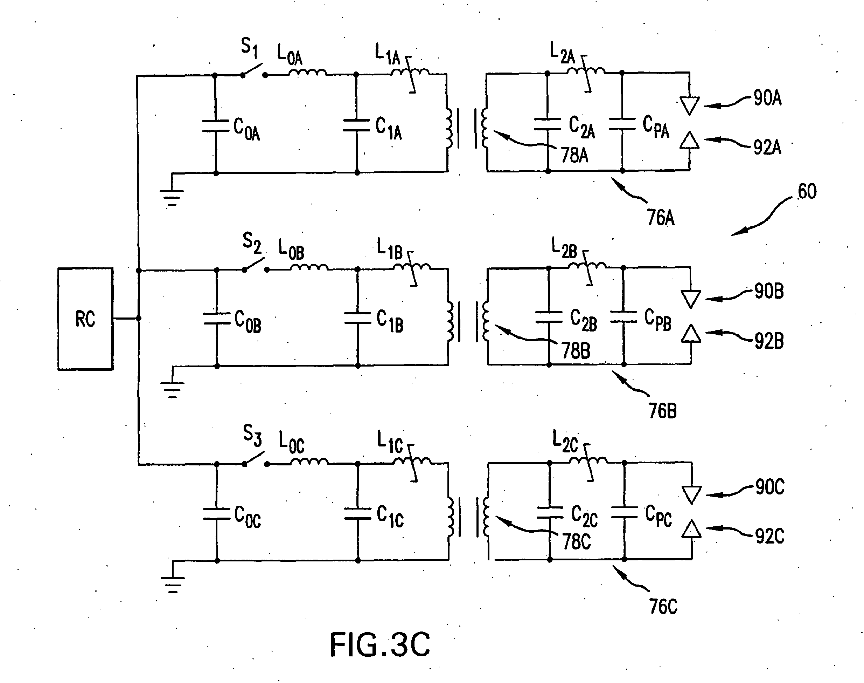

Turning now to FIG. 3C there is shown another embodiment of a pulse power system 60 wherein there are three parallel circuits, each with a C₀, C_{0A}, C_{0B}, and C_{0C}, and with three step up transformers 78A, 78B and 78C and three compression heads 76A, 76B and 76C. In such an embodiment, e.g., the timing of the closing of switch S₁, which may be to the compression head 76A for the MO chamber and may be closed in time to discharge the electrodes in the MO chamber, e.g., at 8KHz, the switches S₂ and S₃ may be closed alternately at rates of, e.g., 4KHz to alternately fire the electrodes 90B, 92B and 90C, 92C in the two PA sections, e.g., 20A1 and 20A2.

It will further be understood that the arrangement according to aspects of embodiments of the present invention may be configured as noted above and in other manners, e.g., the magnetic switching circuits may be employed in conjunction with a single compression head being charge at a rate of 8KHz, the same as a corresponding compression head for the MO chamber, to switch, downstream of the step-up transformer 78, i.e., on the very high voltage side of the step-up transformer, to charge respective peaking capacitors on the PA module, e.g., for the electrodes 90B, 92B and 90C, 92C alternately at rates of, e.g., 4KHz.

In operation therefore, the laser system according to aspects of an embodiment of the present invention may take advantage of the relative simplicity of running, e.g., a MO chamber at, e.g., 8KHz+ while still being able to take advantage of a PA configuration, i.e., e.g., the wider discharge for multiple passes for amplification and not suffer the consequences of, among other things, trying to clear the wider discharge electrode discharge region pulse to pulse as rates of higher than about 4KHz.

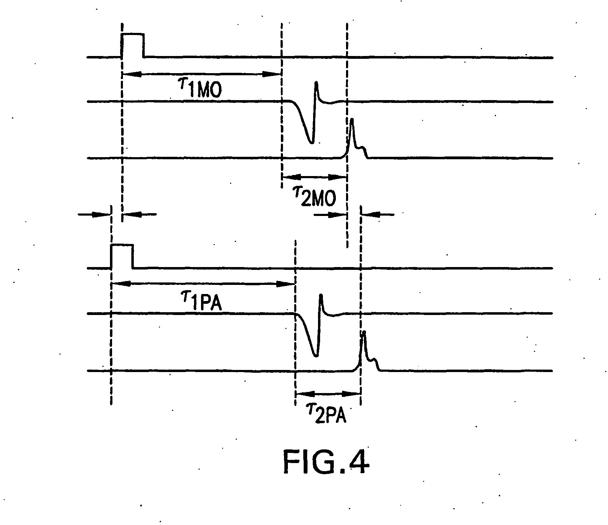

FIG. 4 shows a timing diagram for the firing of an MO chamber gas discharge and a PA gas discharge, for a single pair of electrodes in the PA, with the only difference being according to an aspect of an embodiment of the present invention being that the PA electric discharge at τ_{1PA} plus τ_{2PA} will occur alternatively between electrodes 90B, 92B and 90C, 92C, with perhaps a slight adjustment to τ_{1PA} to account for the delay in the beam 14A passing through electrodes 90B, 92B to reach electrodes 90C, 92C when the discharge is to be between electrodes 90C, 92C according to aspects of an embodiment of the present invention.

It will also be understood by those skilled in the art that there may be applications for the present invention in which line narrowing is not crucial, but high power output at very high repetition rates, even up to 10KHz and above may be required, e.g., for the driving laser of an LPP EUV light source. In this event, e.g., the beam delivery unit 40 discussed above may not deliver the laser beam 14C to a lithography tool per se, but to an EUV light source that in turn delivers EUV light to a lithography tool. In that event, e.g., the line narrowing module 18B may not be required according to aspects of an embodiment of the present invention and, e.g., also the SAM 29 may not be required to measure, e.g., the bandwidth of the beam 14B, and only, e.g., beam direction and pointing need be controlled, e.g., in the BDU 40.

According to aspects of an embodiment of the present invention if the MO beam were made, e.g., roughly half as wide as the PA discharge(s), then a double pass of the PA chamber(s) electrodes, 90B, 92B and 90C, 92C can be performed to essentially entirely sweep the gain in the PA chamber(s). As noted above, this effectively separates high repetition rate problems in reaching, e.g., 8-10 KHz from high power problems.

Another possibility according to aspects of an embodiment of the present invention may be, e.g., to use a single PA chamber 20 with a single set of paired electrodes, e.g., 90B, 92B also configured as a line narrowed oscillator, i.e., having a LNM (not shown) and alternately firing the laser chamber electrodes in an interdigitated fashion ("tic-toc" fashion) to achieve a narrow band output at very high repetition rates, e.g., 10-16KHz. This would sacrifice pulse power in each pulse, but could achieve very high pulse repetition rates, e.g., using a combiner, e.g., a polarizing combiner (not shown) to recombine the two narrow band output beams (not shown) from the two oscillators into a single output beam.

It will also be understood by those skilled in the art that aspects of an embodiment of the present invention may be used, e.g., to achieve a pulse repetition rate of, e.g., about 6KHz, e.g., using an MO firing at 6KHz and two PA, each firing at 3KHz, or other possible combinations for pulse repetition rates o, e.g., greater than 4KHz.

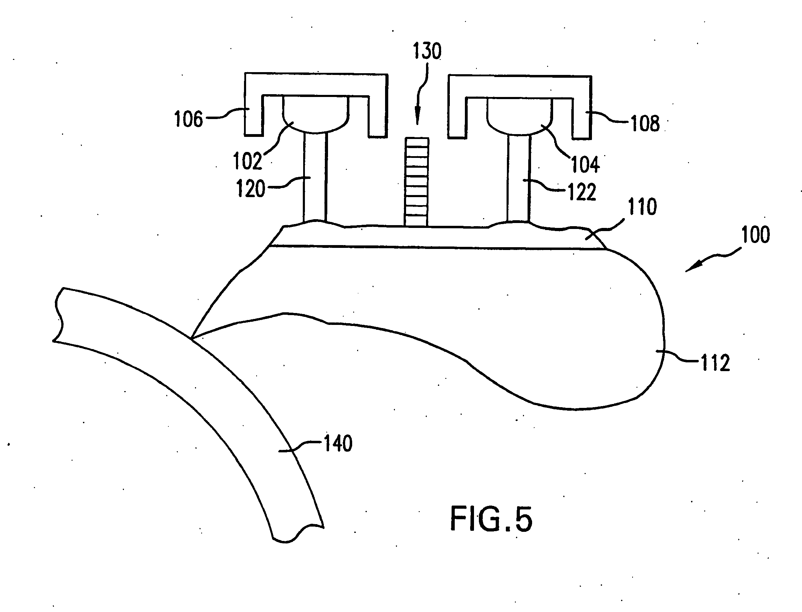

Turning now to FIG. 5 there is shown schematically an alternative embodiment according to aspects of an embodiment of the present invention. In FIG. 5 there is shown an embodiment of a dual electrode system 100, which may comprise, e.g. a first cathode 102 and a second cathode 104 which may be positioned, e.g., in a single chamber each with a respective main insulator 106,108. The two electrodes along with a single anode 110, having appropriately formed anode discharge regions opposite the respective cathode 102, 104 form elongated electrode pairs within the chamber and define elongated discharge regions 120,122 (into the plane of the paper). The anode 110 may be positioned on an anode support 112. The cathode and single anode may be formed, with or without insulation, e.g., a ceramic insulator, between discharge regions. The cathodes 102, 104 may be separated by an elongated converter, e.g., a catalytic converter 130 for transforming, e.g., F into F₂ between the discharge 120 and the discharge 122. Laser gas may be circulated between the electrodes 120, 110 and 122,110 and the respective discharge regions 120, 122 by a fan 140.

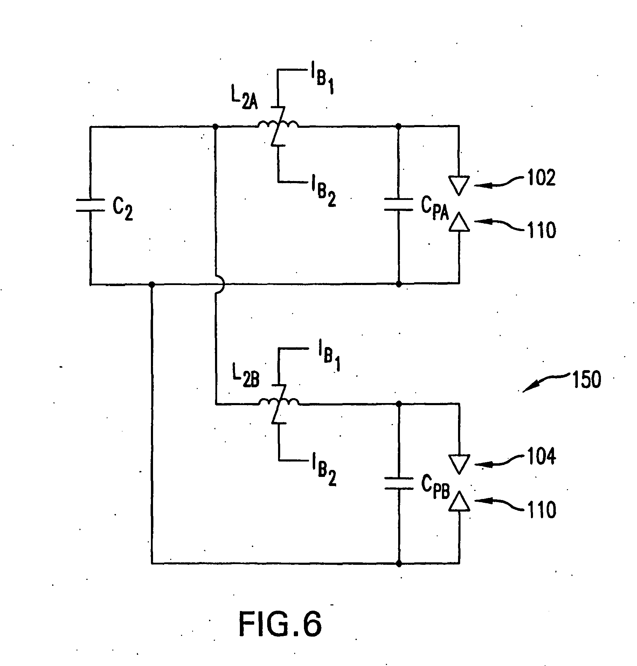

An electric discharge may be created alternatively between the electrodes 120, 110 and 122, 110 respectively creating gas discharges in the discharge regions 120, 122 by a power supply system 150, e.g., as shown in FIG. 6, which is a modification of the system shown, e.g., in FIG.3A, wherein a single compression head capacitor C₂ may be charged at a rate of, e.g., 8Khz and the circuit 150 provide alternating electric discharge voltages on respective peaking capacitors C_{PA} and C_{PB} through respective magnetically saturable reactor switches L_{2A} and L_{2B}. The switches L_{2A} and L_{2B} may be switched between oppositely directed biasing currents from bias current sources I_{B1} and I_{B2}, e.g., at 8KHz, utilizing a suitable switching circuit.(not shown) to cause the charge on C₂ alternatively to be dumped on C_{PA} and C_{PB} at the desired, e.g., 8KHz.

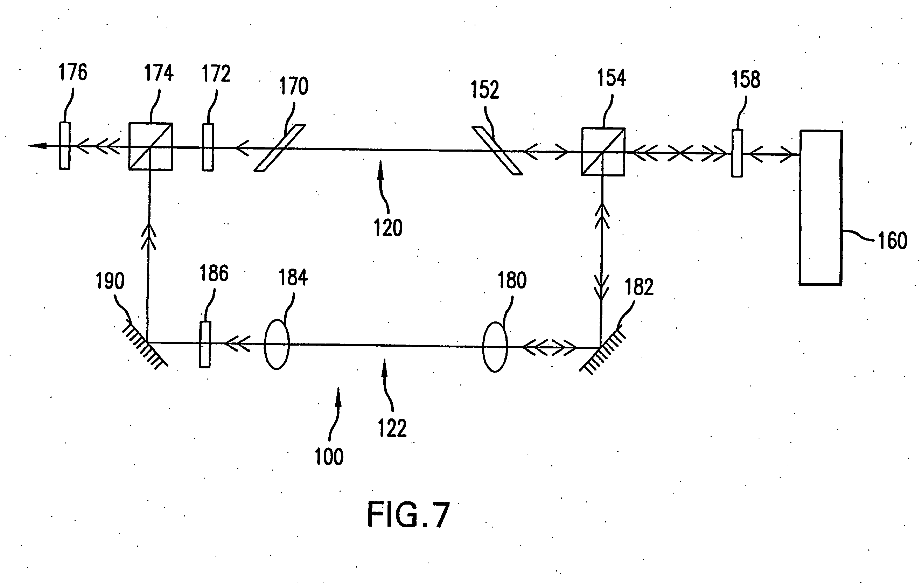

Turning now to FIG. 7 there is shown schematically aspects of an embodiment of the present invention shown in FIG. 5 and 6 wherein, e.g., only one line narrowing package 160 is needed. As shown in FIG. 7, the first discharge light, indicated by single arrows, may pass, e.g., through a rear window 152 in, e.g., an oscillating cavity, which may be oriented according to the polarization of the light desired to pass through that window, 152, e.g., a first polarization direction and into and through a polarizing beam splitter that is essentially transparent to light of the first polarization direction. The light from the discharge 120 may then pass into a line narrowing package 160 configured for operation with light of the first polarization direction through a half wave plate 158 or other polarizing mechanism that, e.g., may be a rotating half wave plate 158 that is rotated at the pulse repetition rate of the laser system 100, such that when the light from the discharge 120 is traversing from and to the line narrowing package, the half wave plate 158 is not in the optical path. It will be understood that the polarizing mechanism may also be, e.g., an electrically or magnetically or mechanically or otherwise actuated optical element, that can be, e.g., periodically switched (actuated) to pass light of one polarizing direction, e.g., the first polarizing direction, or another, e.g., the second polarizing direction.

Similarly, the laser light pulses produced in the discharge 122 in laser system 100 may be passed through, e.g., a rear window 180 that may be, e.g., oriented to pass light of a different polarization direction, e.g., a second polarization direction, indicated by double arrows, which may then be reflected by a mirror 182 that is essentially totally reflective of the light of the second polarization direction and onto the polarizing beam splitter that is essentially totally reflective of the light of the second polarization direction and then through the polarizing mechanism 158, e.g., the half wave plate, which in the case of the light from the discharge region 122 may convert the light from the second polarization direction to the first polarization direction for line narrowing in the line narrowing package 160. Upon return from the line narrowing package 160, this light from the discharge region 122 may again pass through the polarizing mechanism, e.g., half wave plate 158 and be again converted back to the second polarization direction for passage back through the resonance cavity of the discharge 122, e.g., through a front window 184 oriented for the second polarization direction and the reflecting mirror 190 essentially totally reflective for light of the second polarization direction and not to, e.g., a polarizing beam splitter 174 that is essentially totally transparent to the light of the first polarization direction exiting the output couple of the cavity of discharge region 120 and totally reflective of the light of the second polarization direction exiting the output coupler 186 of the resonance cavity of the discharge region 122. Another polarizing mechanism 176, similar to that referenced above in regard to polarizing mechanism 158, may intermittently also change the polarization of either the light of the first polarization direction from the resonance cavity of the discharge region 120 to the second polarization direction of the light of the discharge region 122, to produce an output of a selected polarization direction, e.g., the first polarization direction.

In operation according to aspects of an embodiment of the present invention there is provided a method and apparatus for the delivery of pulsed energy to the two sets of paired gas discharges, e.g., in two PA sections that may comprise a compression head (capacitive storage with electrical pulse-compression utilizing a saturable reactor magnetic switch. Between the peaking capacitors (final stage a across the electrodes) and the compression head each of the paired discharges may have a separate saturable magnetic switch, which may be biased in such an opposite fashion as to have each of the paired discharge electrodes operate at, e.g., half of the total output repetition rate that the compression head (and the MO chamber) experiences. The biasing power requirements for a biasing power supply can be used to switch many (multiple) discharge regions. The discharges, e.g., in the PA sections may be in a single chamber or more than one chamber and the same resonance charger may drive both the MO chamber discharges and the PA chamber(s) discharge at 8KHz (C₀ charging), while the PA electrodes are alternately fired at, e.g., 44KHz.

It will be understood by those skilled in the art that modification of the polarization of the output of the laser system 100 may occur, e.g., in the BDU 40, or may occur downstream even of the BDU, e.g., inside of a lithography tool. It will also be understood that the laser system 100 could be configured, e.g., along with a single or multiple, e.g., double chambered (double discharge region) power amplifier or even power oscillator to produce MOPA and/or MOPO configurations and/or that the system 100 could be a PO in a MOPO, e.g., receiving MO output pulses at the ultimate output pulse repetition rate of the entire MOPO system and interdigitated between the discharge region 120 and the discharge region 122 each operating at one half the ultimate output pulse repetition rate of the , e.g., MOPO system. Further such a configuration could easily be modified to operate as a very high repetition rate POPO system.

## Claims

1. An apparatus comprising:
a high repetition rate gas discharge laser system (10) in a MOPA configuration comprising:
a master oscillator gas discharge laser system (18) producing a beam of oscillator laser output light pulses at the high pulse repetition rate,
**characterized in that**,
at least two power amplification gas discharge laser systems (20 A1, 20 A2) receiving laser output light pulses from the master oscillator gas discharge laser system (18) and each of the at least two power amplification gas discharge laser systems (20 A1, 20 A2) amplifying some of the received laser output light pulses at a pulse repetition rate that is a fraction of the high pulse repetition rate equal to one over the number of the at least two power amplification gas discharge laser systems (20 A1, 20 A2) to form a combined amplified laser output light pulse beam at the high pulse repetition rate.

2. The apparatus of claim 1, wherein
the at least two power amplification gas discharge laser systems (20 A1, 20 A2) are two power amplification gas discharge laser systems (20 A1, 20 A2).

3. The apparatus of claim 2 further comprising:
the at least two power amplification gas discharge laser systems (20 A1, 20 A2) are positioned in series with respect to the master oscillator laser (18) output light pulse beam.

4. The apparatus of claim 3 further comprising:
the master oscillator gas discharge laser system (18) fires at a pulse repetition rate of X ≥ 4000Hz or of X ≥ 5000 Hz; and
each power amplification gas discharge laser system (20 A1, 20 A2) fires at ½X.

5. The apparatus of claim 4 further comprising:
a beam delivery unit (40) connected to the laser light output of the power amplification laser system (20A) and directing the output of the power amplification laser system (20A) to an input of a light utilization tool (12) and providing at least beam pointing and direction control.

6. An apparatus comprising:
a lithography tool (12) and an apparatus according to one of claims 1 to 5.

7. An apparatus as in any one of claims 1 to 6, wherein said very high repetition rate gas discharge laser system (10) is part of a
a laser produced plasma EUV light source.

8. The apparatus of claim 1, wherein the at least two power amplification gas discharge laser systems are alternately selected for producing a gas discharge for a given output light pulse from the master oscillator gas discharge laser system.

9. A method comprising:
producing a high repetition rate gas discharge laser system output in a MOPA configuration (10) comprising:
utilizing a master oscillator gas discharge laser system (18), producing a beam of oscillator laser output light pulses at the high pulse repetition rate,
**characterized by**
utilizing at least two power amplification gas discharge laser systems (20 A1, 20 A2), receiving laser output light pulses from the master oscillator gas discharge laser system (18) and, in each of the at least two power amplification gas discharge laser systems (20 A1, 20 A2), amplifying some of the received laser output light pulses at a pulse repetition rate that is a fraction of the high pulse repetition rate equal to one over the number of the at least two power amplification gas discharge laser systems (20 A1, 20 A2) to form an amplified output laser light pulse beam at the high pulse repetition rate.

10. The method of claim 9, further comprising alternately selecting the at least two power amplification gas discharge laser systems for producing a gas discharge for a given output light pulse from the master oscillator gas discharge laser system.

## Patentansprüche

1. Vorrichtung, die umfasst:
ein Gasentladungs-Lasersystem (10) mit hoher Wiederholrate in einer MOPA-Konfiguration, das umfasst:
ein Masteroszillator-Gasentladungs-Lasersystem (18), das einen Strahl aus Oszillator-Laser-Ausgangslichtimpulsen mit der hohen Impuls-Wiederholrate erzeugt;
**dadurch gekennzeichnet, dass**
wenigstens zwei Leistungsverstärkungs-Gasentladungs-Lasersysteme (20A1, 20A2) Laser-Ausgangslichtimpulse von dem Masteroszillator-Gasentladungs-Lasersystem (18) empfangen und jedes der wenigstens zwei Leistungsverstärkungs-Gasentladungs-Lasersysteme (20A1, 20A2) einige der empfangenen Laser-Ausgangslichtimpulse bei einer Impuls-Wiederholrate verstärkt, die ein Bruchteil der hohen Impuls-Wiederholrate ist, der dem Kehrwert der Anzahl der wenigstens zwei Leistungsverstärkungs-Gasentladungs-lasersysteme (20A1, 20A2) entspricht, um einen kombinierten verstärkten Laser-Ausgangslichtimpuls-Strahl bei der hohen Impuls-Wiederholrate zu erzeugen.

2. Vorrichtung nach Anspruch 1, wobei
die wenigstens zwei Leistungsverstärkungs-Gasentladungs-Lasersysteme (20A1, 20A2) zwei Leistungsverstärkungs-Gasentladungs-Lasersysteme (20A1, 20A2) sind.

3. Vorrichtung nach Anspruch 2, die des Weiteren umfasst, dass die wenigstens zwei Leistungsverstärkungs-Gasentladungs-Lasersysteme (20A1, 20A2) in Bezug auf den Ausgangslichtimpuls-Strahl des Masteroszillator-Lasers (18) in Reihe angeordnet sind.

4. Vorrichtung nach Anspruch 3, die des Weiteren umfasst, dass das Masteroszillator-Gasentladungs-Lasersystem (18) mit einer Impuls-Wiederholrate von X ≥ 4000 Hz oder X ≥ 5000 Hz zündet; und
jedes Leistungsverstärkungs-Gasentladungs-Lasersystem (20A1, 20A2) bei 1/2 X zündet.

5. Vorrichtung nach Anspruch 4, die des Weiteren umfasst:
eine Strahlführungseinheit (40), die mit dem Laserlichtausgang des Leistungsverstärkungs-Lasersystems (20A) verbunden ist und die Leistungsabgabe des Leistungsverstärkungs-Lasersystems (20A) zu einem Eingang eines Lichtnutzungswerkzeugs (12) leitet und wenigstens Strahlrichtungs- und Richtungssteuerung bewirkt.

6. Vorrichtung, die umfasst:
ein Lithografiewerkzeug (12) sowie eine Vorrichtung nach einem der Ansprüche 1 bis 5.

7. Vorrichtung nach einem der Ansprüche 1 bis 6, wobei das Gasentladungs-Lasersystem (10) mit hoher Wiederholrate Teil einer EUV-Lichtquelle auf Basis von lasererzeugtem Plasma ist.

8. Vorrichtung nach Anspruch 1, wobei die mindestens zwei Leistungsverstärker-Gasentladungs-Lasersysteme abwechselnd zum Erzeugen einer Gasentladung für einen bestimmten Ausgangslichtimpuls von dem Masteroszillator-Gasentladungs-Lasersystem ausgewählt werden.

9. Verfahren, das umfasst:
Erzeugen einer Gasentladungs-Lasersystemausgabe mit hoher Wiederholrate in einer MOPA-Konfiguration (10), umfassend:
Einsetzen eines Maseroszillator-Gasentladungs-Lasersystems (18), das einen Strahl aus Oszillator-Laser-Ausgangslichtimpulsen mit der hohen Impuls-Wiederholrate erzeugt;
**gekennzeichnet durch**
Einsetzen von wenigstens zwei Leistungsverstärkungs-Gasentladungs-Lasersystemen (20A1, 20A2), Empfangen von Laser-Ausgangslichtimpulsen von dem Maseroszillator-Gasentladungs-Lasersystem (18) und Verstärken einiger der empfangenen Laser-Ausgangslichtimpulse in jedem der wenigstens zwei Leistungsverstärkungs-Gasentladungs-Lasersysteme (20A1, 20A2) bei einer Impuls-Wiederholrate, die ein Bruchteil der hohen Impuls-Wiederholrate ist, der dem Kehrwert der Anzahl der wenigstens zwei Leistungsverstärkungs-Gasentladungs-Lasersysteme (20A1, 20A2) entspricht, um einen verstärkten Ausgangs-Laserlichtimpuls-Strahl bei der hohen Impuls-Wiederholrate zu erzeugen.

10. Verfahren nach Anspruch 9, das zusätzlich ein abwechselndes Auswählen der mindestens zwei Leistungsverstärker-Gasentladungs-Lasersysteme zum Erzeugen einer Gasentladung für einen bestimmten Ausgangslichtimpuls von dem Masteroszillator-Gasentladungs-Lasersystem umfasst.

## Revendications

1. Dispositif comprenant :
un système laser à décharge de gaz à haute fréquence de répétition (10) dans une configuration MOPA, comprenant :
un système laser à décharge de gaz d'oscillateur maître (18) produisant un faisceau d'impulsions de lumière de sortie laser d'oscillateur à la haute fréquence de répétition d'impulsion,
**caractérisé en ce que**
au moins deux systèmes laser à décharge de gaz d'amplification de puissance (20 A1, 20 A2) recevant les impulsions de lumière de sortie laser provenant du système laser à décharge de gaz d'oscillateur maître (18) et chacun des systèmes laser à décharge de gaz d'amplification de puissance (20 A1, 20 A2) amplifiant certaines des impulsions de lumière de sortie laser reçues à une fréquence de répétition d'impulsion qui est une fraction de la haute fréquence de répétition d'impulsion égale à un sur le nombre des systèmes laser à décharge de gaz d'amplification de puissance (20 A1, 20 A2) pour former un faisceau d'impulsions de lumière de sortie laser amplifié combiné à la haute fréquence de répétition d'impulsion.

2. Dispositif selon la revendication 1, dans lequel les systèmes laser à décharge de gaz d'amplification de puissance (20 A1, 20 A2) sont deux systèmes laser à décharge de gaz d'amplification de puissance (20 A1, 20 A2).

3. Dispositif selon la revendication 2, comprenant en outre :
les systèmes laser à décharge de gaz d'amplification de puissance (20 A1, 20 A2) qui sont placés en série par rapport au faisceau d'impulsions de lumière de sortie du laser d'oscillateur maître (18).

4. Dispositif selon la revendication 3, comprenant en outre :
le système laser à décharge de gaz d'oscillateur maître (18) qui déclenche à une fréquence de répétition d'impulsion de X ≥ 4000 Hz ou de X ≥ 5000 Hz ; et
chaque système laser à décharge de gaz d'amplification de puissance (20 A1, 20 A2) qui déclenche à 1/2 X.

5. Dispositif selon la revendication 4, comprenant en outre :
une unité de fourniture de faisceau (40) connectée à la sortie de lumière laser du système laser d'amplification de puissance (20 A) et dirigeant la sortie du système laser d'amplification de puissance (20 A) sur une entrée d'un outil d'utilisation de lumière (12) et fournissant au moins une commande de pointage et direction de faisceau.

6. Dispositif comprenant :
un outil de lithographie (12) et un dispositif selon une des revendications 1 à 5.

7. Dispositif selon l'une quelconque des revendications 1 à 6, dans lequel ledit système laser à décharge de gaz à très haute fréquence de répétition (10) fait partie d'une source de lumière EUV à plasma produit par laser.

8. Dispositif selon la revendication 1, dans lequel les deux systèmes laser à décharge de gaz d'amplification de puissance sont sélectionnés alternativement pour produire un gaz de décharge pour une impulsion de lumière donnée du système laser à décharge de gaz d'oscillateur maître.

9. Procédé comprenant :
la production d'une sortie d'un système laser à décharge de gaz à haute fréquence de répétition dans une configuration MOPA (10), comprenant :
l'utilisation d'un système laser à décharge de gaz d'oscillateur maître (18) produisant un faisceau d'impulsions de lumière de sortie laser d'oscillateur à la haute fréquence de répétition d'impulsion,
**caractérisé par**
l'utilisation d'au moins deux systèmes laser à décharge de gaz d'amplification de puissance (20 A1, 20 A2) recevant les impulsions de lumière de sortie laser provenant du système laser à décharge de gaz d'oscillateur maître (18) et, dans chacun des systèmes laser à décharge de gaz d'amplification de puissance (20 A1, 20 A2), amplifiant certaines des impulsions de lumière de sortie laser reçues à une fréquence de répétition d'impulsion qui est une fraction de la haute fréquence de répétition d'impulsion égale à un sur le nombre des systèmes laser à décharge de gaz d'amplification de puissance (20 A1, 20 A2) pour former un faisceau d'impulsions de lumière de sortie laser amplifié à la haute fréquence de répétition d'impulsion.

10. Procédé selon la revendication 9, comprenant en outre la sélection alternative des deux systèmes laser à décharge de gaz d'amplification de puissance pour produire un gaz de décharge à une impulsion de lumière donnée du système laser à décharge de gaz d'oscillateur maître.
